# EUROPEAN PATENT SPECIFICATION

(11) **EP 4 446 224 B1**
(45) Date of publication and mention of the grant of the patent: **08.04.2026**
(21) Application number: 24169025.4
(22) Date of filing: 08.04.2024
(51) Int. Cl.: B64D 11/06

(54) **ECONOMY SEAT TO FULL BED**
SITZ MIT ECONOMY-FUNKTION FÜR VOLLBETT
SIÈGE ÉCONOMIQUE POUR LIT PLEIN

(30) Priority: 11.04.2023 IN 202311026865; 05.07.2023 US 202318218324
(43) Date of publication of application: 16.10.2024
(73) Proprietor: B/E Aerospace, Inc., Winston-Salem, NC 27105 (US)
(72) Inventor: PRATHIPATI, Krishna Chaitanya, 500050 Hyderbad (IN); KANDUKURI, Ravindra Ramulu, Secunderabad, TS (IN)
(74) Representative: Dehns

(56) References cited:
- EP-B1- 3 078 594
- GB-A- 2 563 051
- US-A- 5 333 818
- US-A1- 2010 176 633

## Description

### PRIORITY

The present application claims the benefit under 35 U.S.C. § 119(a) of Indian Patent App. No. 202311026865 (filed April 11, 2023).

### BACKGROUND

Economy passenger aircraft seating has an option for reclining the seat back to a certain extent. During long haul journeys, leaning back to sleep is insufficient, passengers experience restless sleep only being able to recline slightly. Most passengers would prefer to have a full, flat bed on long-haul journeys.

It would be advantageous to have an economy passenger aircraft seat that extends to a full bed within the existing space. US 5 333 818 A discloses an aircraft berthing seat with a telescopically extendable seat frame, which comprises three different portions.

### SUMMARY

In one aspect, an aircraft seat frame is provided as defined by claim 1.

In a further aspect, an aircraft seat is provided as defined by claim 5.

In a further aspect, a passenger seating system is provided as defined by claim 8.

It is to be understood that both the foregoing general description and the following detailed description are exemplary and explanatory only and should not restrict the scope of the claims. The accompanying drawings, which are incorporated in and constitute a part of the specification, illustrate exemplary embodiments of the inventive concepts disclosed herein and together with the general description, serve to explain the principles.

### BRIEF DESCRIPTION OF THE DRAWINGS

The numerous advantages of the embodiments of the inventive concepts disclosed herein may be better understood by those skilled in the art by reference to the accompanying figures in which:
FIG. 1A shows a top view of a seat pan frame according to an exemplary embodiment;
FIG. 1B shows a top view of a seat pan frame according to an exemplary embodiment;
FIG. 2A shows a perspective view of a seat according to an exemplary embodiment;
FIG. 2B shows a perspective view of a seat according to an exemplary embodiment;
FIG. 3A shows a top, environmental view of a seat pan frame according to an exemplary embodiment;
FIG. 3B shows a top, environmental view of a seat pan frame according to an exemplary embodiment;
FIG. 4A shows a partial, detail view of an attachment feature according to an exemplary embodiment;
FIG. 4B shows a partial, detail view of an attachment feature according to an exemplary embodiment;
FIG. 5 shows a partial, detail view of an attachment feature according to an exemplary embodiment;
FIG. 6A shows a partial, detail view of a neighboring seat frame according to an exemplary embodiment;
FIG. 6B shows a partial, detail view of a neighboring seat frame according to an exemplary embodiment;
FIG. 6C shows a partial, detail view of a neighboring seat frame according to an exemplary embodiment;
FIG. 6D shows a partial, detail view of a neighboring seat frame according to an exemplary embodiment;
FIG. 7A shows a top view of a seat pan frame according to an exemplary embodiment;
FIG. 7B shows a partial, detail view of a seat pan frame according to an exemplary embodiment;
FIG. 8 shows a perspective view of a seat cushion according to an exemplary embodiment;

### DETAILED DESCRIPTION

Before explaining various embodiments of the inventive concepts disclosed herein in detail, it is to be understood that the inventive concepts are not limited in their application to the arrangement of the components or steps or methodologies set forth in the following description or illustrated in the drawings. In the following detailed description of embodiments of the instant inventive concepts, numerous specific details are set forth in order to provide a more thorough understanding of the inventive concepts. However, it will be apparent to one of ordinary skill in the art having the benefit of the instant disclosure that the inventive concepts disclosed herein may be practiced without these specific details. In other instances, well-known features may not be described in detail to avoid unnecessarily complicating the instant disclosure. The inventive concepts disclosed herein are capable of other embodiments or of being practiced or carried out in various ways. Also, it is to be understood that the phraseology and terminology employed herein is for the purpose of description and should not be regarded as limiting.

As used herein a letter following a reference numeral is intended to reference an embodiment of a feature or element that may be similar, but not necessarily identical, to a previously described element or feature bearing the same reference numeral (e.g., 1, 1a, 1b). Such shorthand notations are used for purposes of convenience only, and should not be construed to limit the inventive concepts disclosed herein in any way unless expressly stated to the contrary.

Further, unless expressly stated to the contrary, "or" refers to an inclusive or and not to an exclusive or. For example, a condition A or B is satisfied by anyone of the following: A is true (or present) and B is false (or not present), A is false (or not present) and B is true (or present), and both A and B are true (or present).

In addition, use of "a" or "an" are employed to describe elements and components of embodiments of the instant inventive concepts. This is done merely for convenience and to give a general sense of the inventive concepts, and "a" and "an" are intended to include one or at least one and the singular also includes the plural unless it is obvious that it is meant otherwise.

Also, while various components may be depicted as being connected directly, direct connection is not a requirement. Components may be in data communication with intervening components that are not illustrated or described.

Finally, as used herein any reference to "one embodiment," or "some embodiments" means that a particular element, feature, structure, or characteristic described in connection with the embodiment is included in at least one embodiment of the inventive concepts disclosed herein. The appearances of the phrase "in at least one embodiment" in the specification does not necessarily refer to the same embodiment. Embodiments of the inventive concepts disclosed may include one or more of the features expressly described or inherently present herein, or any combination or sub-combination of two or more such features.

Broadly, embodiments of the inventive concepts disclosed herein are directed to an economy aircraft seat having a telescopically extensible seat pan frame. Multiple telescoping sections extend forward with stops to prevent overextension. A forward edge of the extensible seat pan frame includes clips to affix the extensible seat pan frame to a neighboring passenger seat frame. The extensible seat pan frame includes supports that transversely span the extensible seat pan frame.

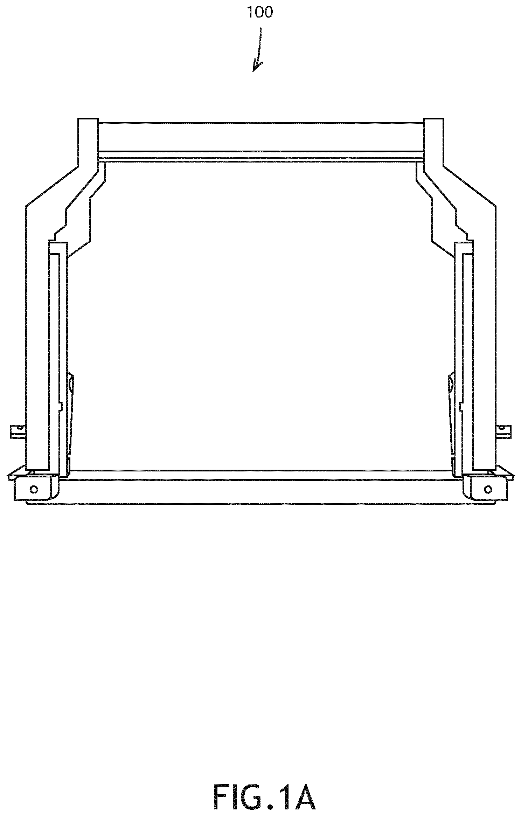

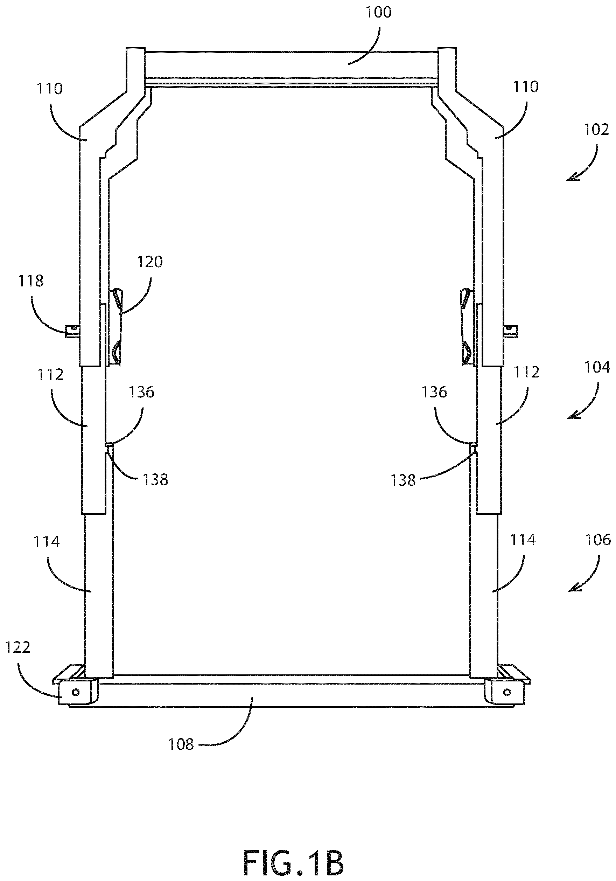

Referring to FIGS. 1A-1B, a top view of a seat pan frame 100 according to an exemplary embodiment are shown. The seat pan frame 100 is configured to transition from a collapsed configuration (as in FIG. 1A) to an extended configuration (as in FIG. 1B). The seat pan frame 100 comprises a first frame portion 102 consisting of two substantially stationary rails 110. The stationary rails 110 are connected by a posterior element 116. A second frame portion 104 consists of two telescoping rails 112 that are configured to translate within the stationary rails 110 of the first frame portion 102. A third frame portion 106 consists of two telescoping rails 114 that are configured to translate within the telescoping rails 112 of the second frame portion 104. The telescoping rails 114 of the third frame portions are connected by an anterior element 108. The anterior element 108 may include attachment features 122 to secure the third frame portion 106 to the frame of another aircraft seat for stability.

In at least one embodiment, one or more of the frame portions 102, 104, 106 may include limiting features 118, 136, 138 to prevent over extension. Furthermore, one or more of the frame portions 102, 104, 106 may include roller guide pockets 120 to facilitate articulation of the seat pan assembly in a collapsed configuration. Seat pan movement is restricted to the length of an existing slot in the longitudinal direction (front to aft of seat).

In at least one embodiment, the first frame portion 110 may include a first limiting feature 118 disposed to engage some element of the second frame portion 112 and prevent the second frame portion 112 from translating beyond a predefined limit. Furthermore, the second frame portion 112 may include a second limiting feature 138 disposed to engage a third limiting feature 136 disposed on the third frame portion 114 when the third frame portion 114 reaches a predefined maximum translation point.

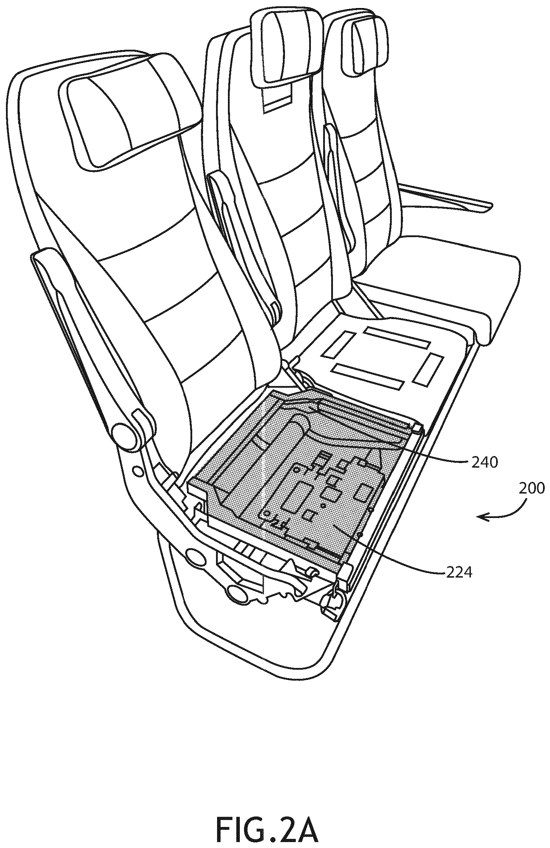

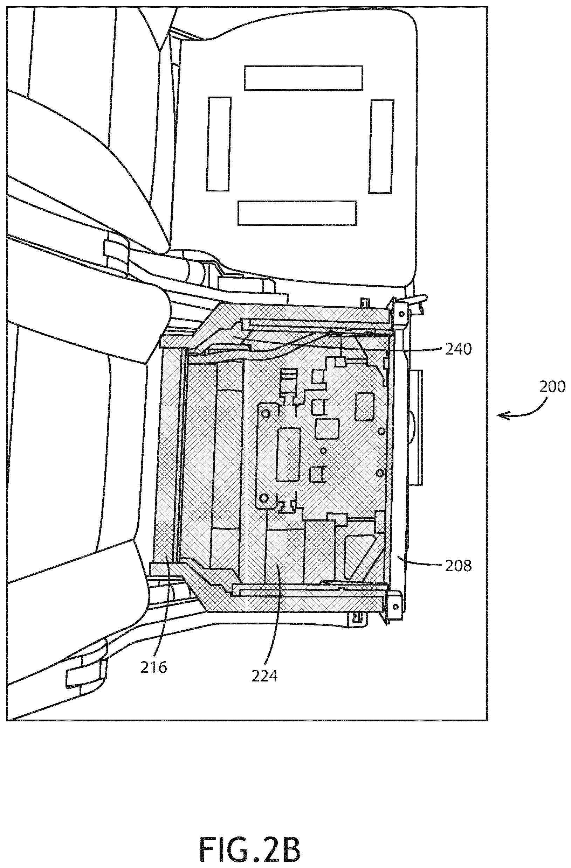

Referring to FIGS. 2A-2B, a perspective view of a seat according to an exemplary embodiment are shown. In a collapsed configuration, the seat includes a seat pan frame 200 with a posterior element 216 disposed proximal to a seat back and an anterior element 208 disposed distal to the seat back. The seat pan frame 200 may include a mesh or other support 224 connected to the seat pan frame 200 at various points. In at least one embodiment, the support 224 may comprise a set of diaphragms, each separately affixed to a frame portion as described herein. The support 224 provides a surface for a seat cushion as described herein.

In at least one embodiment, the seat may include a roller 240 and roller guide with an extended top face. When the seat pan frame 200 is assembled into the guide ways, a top cap from seat pan frame 200 will cover the guide ways.

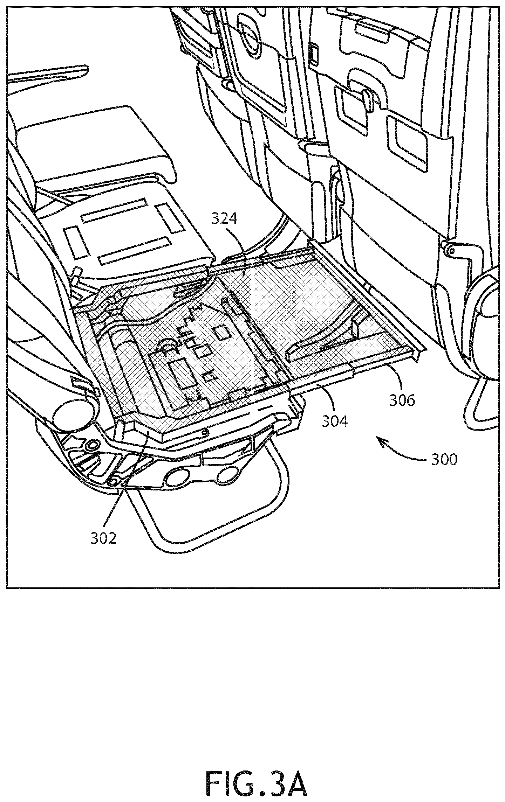

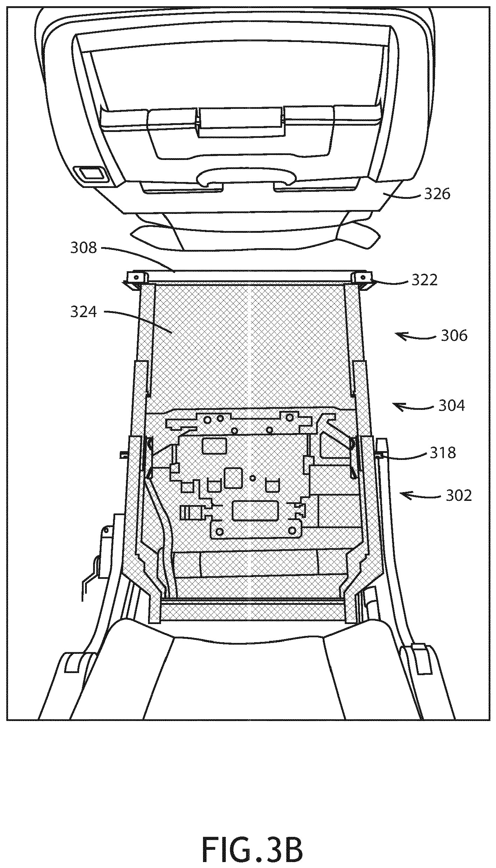

Referring to FIGS. 3A-3B, a top, environmental view of a seat pan frame 300 according to an exemplary embodiment are shown. In an extended configuration, a second frame portion 304 and third frame portion 306 of a seat pan frame telescopically extend from a substantially stationary first frame portion 302. When in an extended configuration, a support 324 spans the seat pan frame from a posterior element of the first frame portion 302 to an anterior element 308 of the third frame portion 306. The support 324 provides a surface for an elongated seat cushion as described herein.

In at least one embodiment, the support 324 may be affixed to the first frame portion 302 and the third frame portion 306. Alternatively, the support 324 may be affixed to the first frame portion 302, second frame portion 304, and third frame portion 306 at strategic points so as to not interfere with periodic extension and retraction of the second frame portion 304 and third frame portion 306.

When in the elongated configuration, the anterior element 308 is proximal to a neighboring aircraft seat 326. In at least one embodiment, the anterior element 308 may include attachment features 322 to temporarily secure the anterior element 308 (and thereby the third frame portion 306 and the seat pan frame generally) to the neighboring aircraft seat 326. By temporarily securing the anterior element 308 to the neighboring aircraft seat 326, a load on the seat pan frame is distributed.

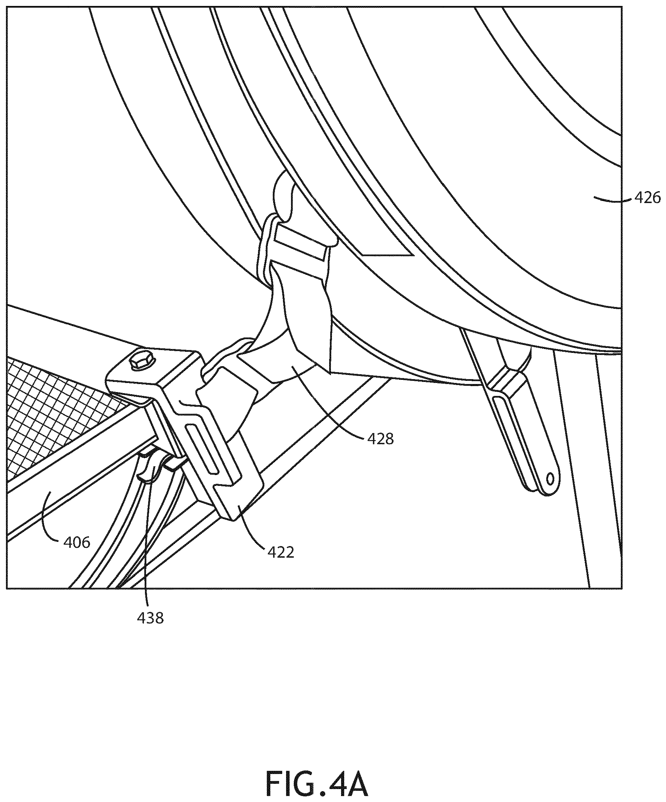

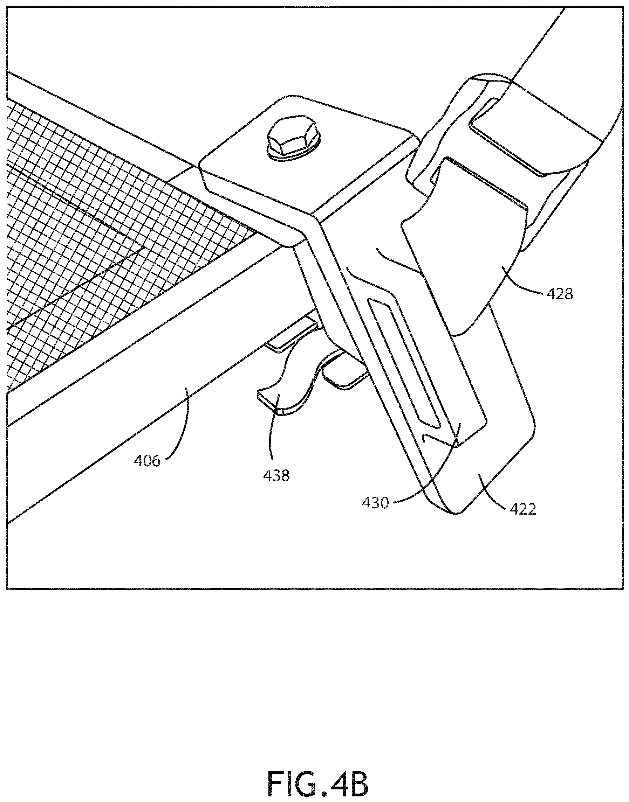

Referring to FIGS. 4A-4B, a partial, detail view of an attachment feature 422 according to an exemplary embodiment are shown. When a seat pan frame according to the present disclosure is in an extended configuration, an attachment feature 422 disposed on a third frame portion 406 is disposed proximal to a neighboring aircraft seat 426. A support strap 428 or other connection feature connects the attachment feature 422 to the neighboring aircraft seat 426.

In at least one embodiment, the support strap 428 may be adapted to engage existing frame structures in the neighboring aircraft seat 426. Alternatively, or in addition, the neighboring seat 426 may include structural attachment points specifically adapted to receive the support strap 428.

In at least one embodiment, the attachment feature 422 may define attachment points 430 specifically configured to receive clips or other engagement features of the support straps 428. Alternatively, the attachment points 430 (and the attachment features 422 generally) may also operate to secure the third frame portion 406 (and thereby the entire seat pan frame) in the collapsed configuration via a releasable connection to some stationary portion of the aircraft seat frame (not shown). A locking mechanism 438 may releasably connect the third frame portion 406 to another portion of the seat pan frame to retain the entire seat frame in the collapsed configuration.

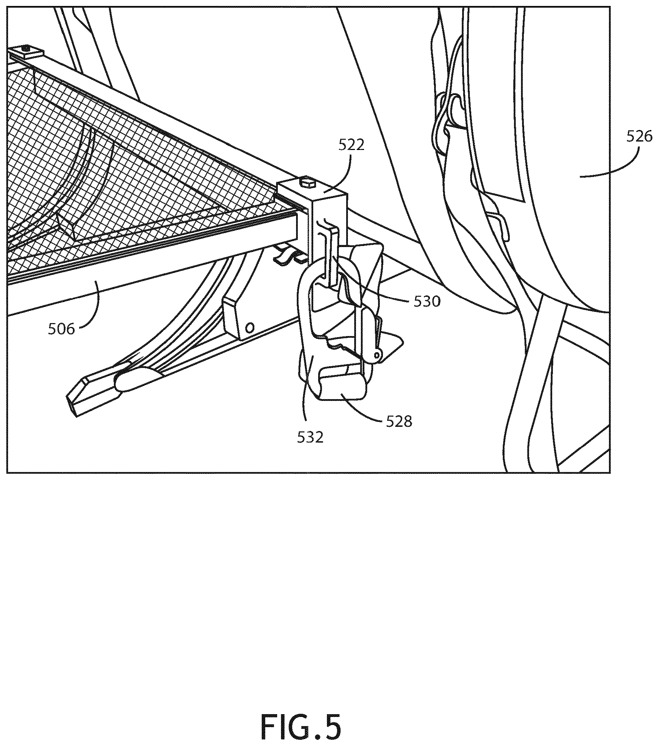

Referring to FIG. 5, a partial, detail view of an attachment feature according to the invention is shown. When a seat pan frame according to the present disclosure is in an extended configuration, an attachment feature 522 disposed on a third frame portion 506 is disposed proximal to a neighboring aircraft seat 526. The attachment feature 522 defines one or more attachment points 530 specifically configured to receive a clip 532 disposed on a support strap 528. In at least one embodiment, the support strap 528 may be permanently affixed to another portion of the attachment feature 522 and releasably connected to the attachment point 530 via the clip 532. While in a collapsed configuration, the attachment point 530 keeps the clip 532 and corresponding support strap 528 in a predefined location, and out of the way of the passenger and the telescoping components of the seat pan frame. In an extended configuration, the clip 532 may be disengaged from the attachment point 530 and engaged to the neighboring seat 526.

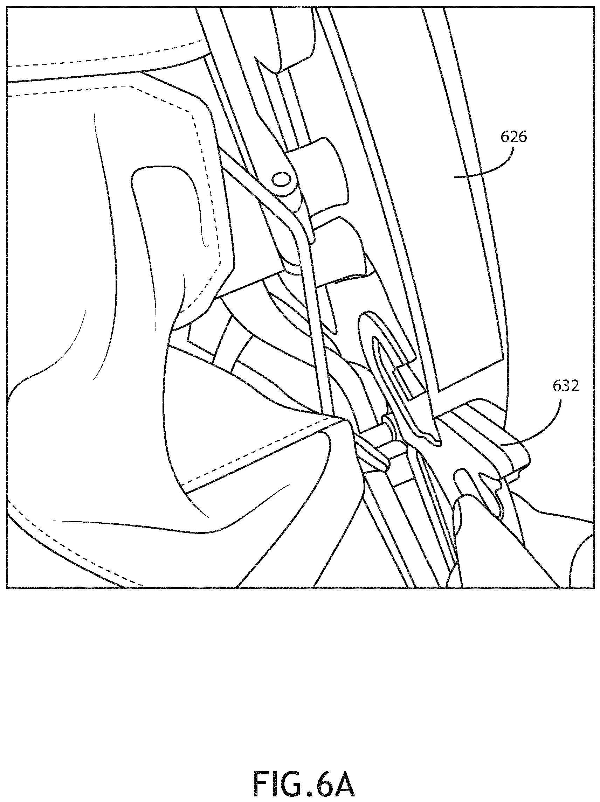

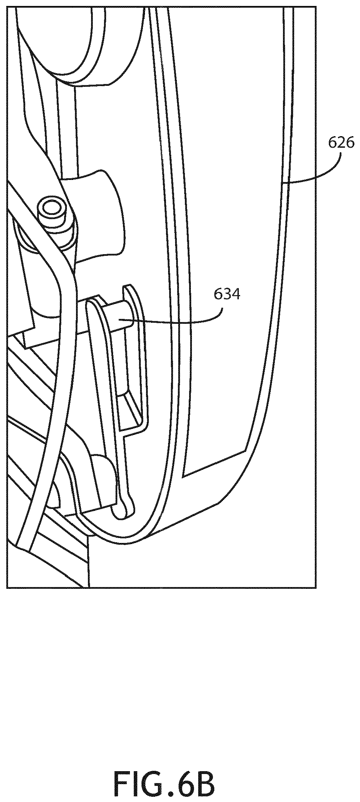

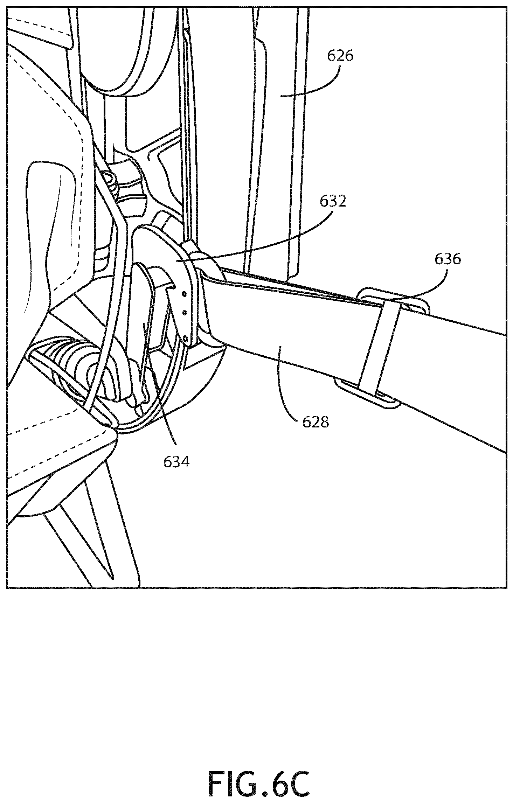

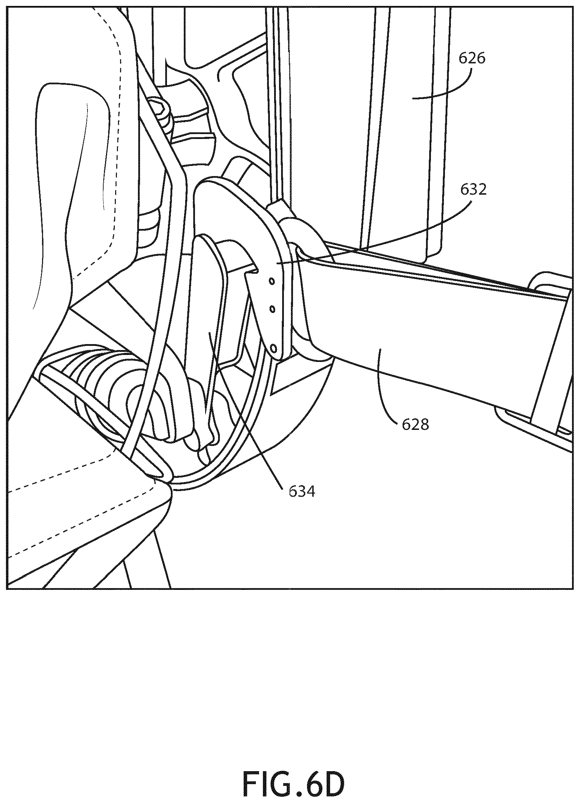

Referring to FIGS. 6A-6D, partial, detail views of a neighboring seat frame according to an exemplary embodiment are shown. In a passenger seating system including seats with a seat pan frame according to the present disclosure, there may be neighboring seats 626 disposed in front of such seat pan frame. When in an extended configuration, the seat pan frame may be cantilevered and vulnerable to forces at the distal end of the extended seat pan frame. To counteract such forces, a support strap 628 may connect the distal end of the extended seat pan frame to the neighboring seat 626.

In at least one embodiment, the neighboring seat 626 includes an attachment point 634 that is mechanically connected to the frame of the neighboring seat 626. The attachment point 634 is specifically adapted to engage a clip 632 disposed on the support strap 628. Alternatively, the clip 632 may be specifically adapted to engage some existing structure in the neighboring seat frame, provided such engagement does not interfere with the neighboring seat 626.

In at least one embodiment, the support strap 628 may include an adjustment element 636 to tighten or loosen the support strap 628 as necessary to support the distal end of the corresponding seat pan frame.

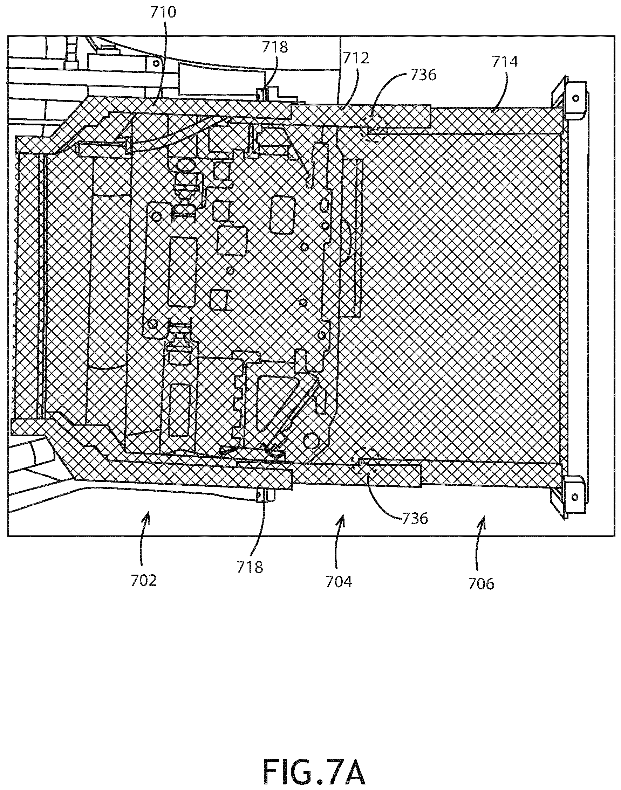

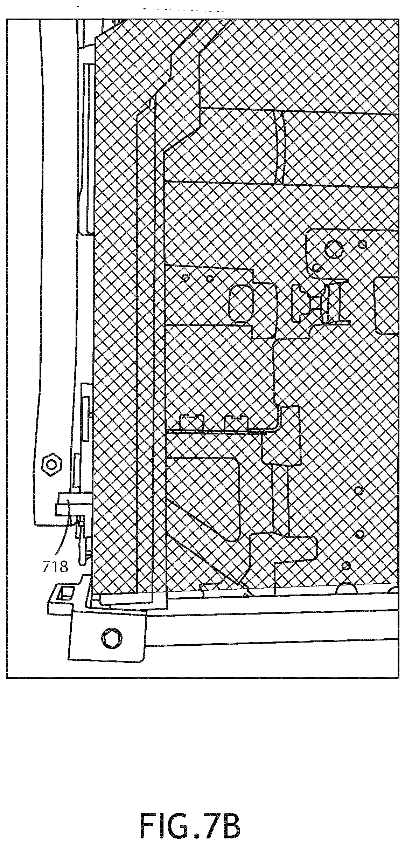

Referring to FIGS. 7A-7B, a top view and a partial detail of a seat pan frame according to an exemplary embodiment are shown. The seat pan frame is configured to transition from an extended configuration (as in FIG. 7A) to a collapsed configuration (as in FIG. 7B). The seat pan frame comprises a first frame portion consisting of two substantially stationary rails 710, a second frame portion consists of two telescoping rails 712 that are configured to translate within the stationary rails 710 of the first frame portion, and a third frame portion consists of two telescoping rails 714 that are configured to translate within the telescoping rails 712 of the second frame portion. In at least one embodiment, one or more of the frame portions 702, 704, 706 may include limiting features 718, 736 to prevent over extension. The first frame portion rails 710 may include a first limiting feature 718 disposed to engage some element of the second frame portion rails 712 and prevent the second frame portion from translating beyond a predefined limit. For example, the first limiting feature 718 may extend through the first frame portion rail 710 to engage some element of the second frame portion rail 712.

Furthermore, the second frame portion rails 712 may include a second limiting feature 736 disposed to engage a third limiting feature disposed on the third frame portion rails 714 when the third frame portion reaches a predefined maximum translation point.

It may be appreciated that the limiting features 718, 736 may be configured to avoid existing seat frame structures. For example, the limiting features 718, 736 may disposed internally to the seat pan frame where possible, or configured to protrude less than existing tolerance between the seat pan frame and an aisle bumper.

In at least one embodiment, the seat pan frame may include full length stiffeners to each of the first frame portion, second frame portion, and third frame portion. Such stiffeners provide structure to the diaphragm and reduce swag during the long usage, prevent interference between multiple supports, each attached to a frame portion, and facilitates smooth extension and stowage of the seat pan frame.

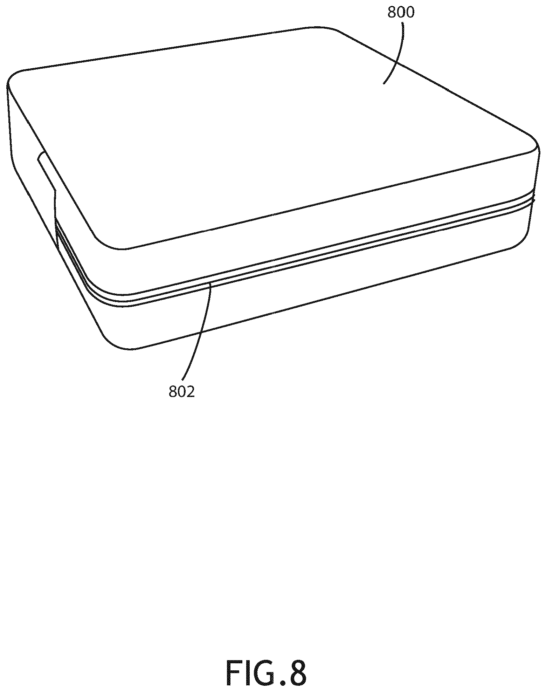

Referring to FIG. 8, a perspective view of a seat cushion 800 according to an exemplary embodiment is shown. When a seat pan frame is in a collapsed configuration, the seat cushion may be folded over and potentially zipped via a zipper 802 into a standard sized aircraft seat cushion. When the seat pan frame is in an extended configuration, the cushion 800 may be unzipped on three sides. The top half may be flipped onto the extension while the bottom half remains on the seat pan frame. In at least one embodiment, the bottom half may include hook-and-loop fabric to keep the cushion 800 in a predefined location.

It is believed that the inventive concepts disclosed herein and many of their attendant advantages will be understood by the foregoing description of embodiments of the inventive concepts, and it will be apparent that various changes may be made in the form, construction, and arrangement of the components thereof without departing from the broad scope of the inventive concepts as defined by the appended claims, or without sacrificing all of their material advantages; and individual features from various embodiments may be combined to arrive at other embodiments.

## Claims

1. An aircraft seat frame comprising:
a first seat pan frame portion (102) comprising stationary rails (110);
a second seat pan frame portion (104) comprising rails (112) configured to translatably engage the stationary rails (110) of the first seat pan frame portion (102); and
a third seat pan frame portion (106) comprising rails (114) configured to translatably engage the rails of the second seat pan frame portion (104), a securing element comprising
an attachment element (522) comprising at least one attachment point (530) configured to receive a clip (532) in a collapsed configuration of the aircraft seat frame, a support strap (528), and the clip (532) disposed on the support strap (522) the support strap affixed to the attachment element (522) the clip disposed to engage a neighboring aircraft seat; and
at least one anterior attachment point (634) disposed on a surface adapted to engage a clip from a separate rear aircraft seat frame,
wherein the first seat pan frame portion (102), second seat pan frame portion (104), and third seat pan frame portion (106) are configured to translate from the collapsed configuration where the first seat pan frame portion (102), second seat pan frame portion (104), and third seat pan frame portion (106) are nested together, to an extended configuration where the first seat pan frame portion (102), second seat pan frame portion (104), and third seat pan frame portion (106) are telescopically extended.

2. The aircraft seat frame of Claim 1, further comprising a locking mechanism (438) disposed on the third seat pan frame portion (106), configured to releasably engage a stationary portion of the aircraft seat frame when in the collapsed configuration.

3. The aircraft seat frame of any preceding Claim, wherein the first seat pan frame portion (102) comprises a first limiting element configured and disposed to engage the second frame portion (104) when in the extended configuration.

4. The aircraft seat frame of Claim 3, wherein:
the second seat pan frame portion (104) comprises a second limiting element;
the third seat pan frame portion (106) comprises a third limiting element; and
the second limiting element is configured and disposed to engage the third limiting element when in the extended configuration.

5. An aircraft seat comprising:
an aircraft seat frame as claimed in any preceding claim.

6. The aircraft seat of Claim 5, further comprising a plurality of support diaphragms, each disposed on a seat pan frame portion to provide support for a cushion (800).

7. The aircraft seat of Claim 6, further comprising a seat cushion (800) comprising a top portion and a bottom portion releasable connected by a zipper (802) on three sides, configured to split and cover the extendable seat pan frame when in the extended configuration.

8. A passenger seating system comprising:
an aircraft seat frame as claimed in any of claims 1-4.

9. The system of Claim 8, further comprising a plurality of support diaphragms, each disposed on a seat pan frame portion to provide support for a cushion.

10. The system of Claim 9, further comprising a seat cushion comprising a top portion and a bottom portion releasable connected by a zipper on three sides, configured to split and cover the extendable seat pan frame when in the extended configuration.

## Patentansprüche

1. Luftfahrzeugsitzrahmen, umfassend:
einen ersten Sitzschalenrahmenabschnitt (102), der stationäre Schienen (110) umfasst;
einen zweiten Sitzschalenrahmenabschnitt (104), der Schienen (112) umfasst, die konfiguriert sind, um verschiebbar mit den stationären Schienen (110) des ersten Sitzschalenrahmenabschnitts (102) in Eingriff zu kommen; und
einen dritten Sitzschalenrahmenabschnitt (106), der Schienen (114) umfasst, die konfiguriert sind, um verschiebbar mit den Schienen des zweiten Sitzschalenrahmenabschnitts (104) in Eingriff zu kommen,
ein Sicherungselement, das ein Befestigungselement (522) umfasst, das mindestens einen Befestigungspunkt (530) umfasst, der konfiguriert ist, um einen Clip (532) in einer zusammengeklappten Konfiguration des Luftfahrzeugsitzrahmens aufzunehmen, einen Haltegurt (528) und den Clip (532), der an dem Haltegurt (522) angeordnet ist, wobei der Haltegurt an dem Befestigungselement (522) befestigt ist, wobei der Clip angeordnet ist, um in einen benachbarten Luftfahrzeugsitz einzugreifen; und
mindestens einen vorderen Befestigungspunkt (634), der auf einer Oberfläche angeordnet ist, die angepasst ist, um mit einem Clip von einem separaten hinteren Luftfahrzeugsitzrahmen in Eingriff zu kommen,
wobei der erste Sitzschalenrahmenabschnitt (102), der zweite Sitzschalenrahmenabschnitt (104) und der dritte Sitzschalenrahmenabschnitt (106) konfiguriert sind, um sich aus der zusammengeklappten Konfiguration, in der der erste Sitzschalenrahmenabschnitt (102), der zweite Sitzschalenrahmenabschnitt (104) und der dritte Sitzschalenrahmenabschnitt (106) ineinander geschachtelt sind, in eine ausgefahrene Konfiguration zu verschieben, in der der erste Sitzschalenrahmenabschnitt (102), der zweite Sitzschalenrahmenabschnitt (104) und der dritte Sitzschalenrahmenabschnitt (106) teleskopisch ausgefahren sind.

2. Luftfahrzeugsitzrahmen nach Anspruch 1, ferner umfassend einen Verriegelungsmechanismus (438), der an dem dritten Sitzschalenrahmenabschnitt (106) angeordnet ist, konfiguriert, um lösbar in einen stationären Abschnitt des Luftfahrzeugsitzrahmens einzugreifen, wenn er sich in der zusammengeklappten Konfiguration befindet.

3. Luftfahrzeugsitzrahmen nach einem der vorhergehenden Ansprüche, wobei der erste Sitzschalenrahmenabschnitt (102) ein erstes Begrenzungselement umfasst, das konfiguriert und angeordnet ist, um mit dem zweiten Rahmenabschnitt (104) in Eingriff zu kommen, wenn er sich in der ausgefahrenen Konfiguration befindet.

4. Luftfahrzeugsitzrahmen nach Anspruch 3, wobei:
der zweite Sitzschalenrahmenabschnitt (104) ein zweites Begrenzungselement umfasst;
der dritte Sitzschalenrahmenabschnitt (106) ein drittes Begrenzungselement umfasst; und das zweite Begrenzungselement konfiguriert und angeordnet ist, um mit dem dritten Begrenzungselement in Eingriff zu kommen, wenn er sich in der ausgefahrenen Konfiguration befindet.

5. Luftfahrzeugsitz, umfassend:
einen Luftfahrzeugsitzrahmen nach einem der vorhergehenden Ansprüche.

6. Luftfahrzeugsitz nach Anspruch 5, ferner umfassend eine Vielzahl von Stützmembranen, die jeweils an einem Sitzschalenrahmenabschnitt angeordnet sind, um eine Stütze für ein Polster (800) bereitzustellen.

7. Luftfahrzeugsitz nach Anspruch 6, ferner umfassend ein Sitzpolster (800), das einen oberen Abschnitt und einen unteren Abschnitt umfasst, die durch einen Reißverschluss (802) an drei Seiten lösbar verbunden sind, konfiguriert, um sich zu teilen und den ausfahrbaren Sitzschalenrahmen abzudecken, wenn er sich in der ausgefahrenen Konfiguration befindet.

8. Passagiersitzsystem, umfassend:
einen Luftfahrzeugsitzrahmen nach einem der Ansprüche 1 bis 4.

9. System nach Anspruch 8, ferner umfassend eine Vielzahl von Stützmembranen, die jeweils an einem Sitzschalenrahmenabschnitt angeordnet sind, um eine Stütze für ein Polster bereitzustellen.

10. System nach Anspruch 9, ferner umfassend ein Sitzpolster, das einen oberen Abschnitt und einen unteren Abschnitt umfasst, die durch einen Reißverschluss an drei Seiten lösbar verbunden sind, konfiguriert, um sich zu teilen und den ausfahrbaren Sitzschalenrahmen abzudecken, wenn er sich in der ausgefahrenen Konfiguration befindet.

## Revendications

1. Cadre de siège d'aéronef comprenant :
une première partie (102) de cadre de baquet de siège comprenant des rails (110) fixes ;
une deuxième partie (104) de cadre de baquet de siège comprenant des rails (112) configurés pour entrer en contact en translation avec les rails (110) fixes de la première partie (102) de cadre de baquet de siège ; et
une troisième partie (106) de cadre de baquet de siège comprenant des rails (114) configurés pour entrer en contact en translation avec les rails de la deuxième partie (104) de cadre de baquet de siège,
un élément de fixation comprenant un élément (522) d'attache comprenant au moins un point (530) d'attache configuré pour recevoir une fixation (532) dans une configuration repliée du cadre de siège d'aéronef, une sangle (528) de support, et la fixation (532) disposée sur la sangle (522) de support, la sangle de support fixée à l'élément (522) d'attache, la fixation disposée pour entrer en contact avec un siège d'aéronef voisin ; et
au moins un point (634) d'attache antérieur disposé sur une surface conçue pour entrer en contact avec une fixation provenant d'un cadre de siège d'aéronef arrière séparé,
dans lequel la première partie (102) de cadre de baquet de siège, la deuxième partie (104) de cadre de baquet de siège et la troisième partie (106) de cadre de baquet de siège sont configurées pour passer de la configuration repliée où la première partie (102) de cadre de baquet de siège, la deuxième partie (104) de cadre de baquet de siège et la troisième partie (106) de cadre de baquet de siège sont imbriquées ensemble, à une configuration étendue où la première partie (102) de cadre de baquet de siège, la deuxième partie (104) de cadre de baquet de siège et la troisième partie (106) de cadre de baquet de siège sont étendues de manière télescopique.

2. Cadre de siège d'aéronef selon la revendication 1, comprenant en outre un mécanisme (438) de verrouillage disposé sur la troisième partie (106) de cadre de baquet de siège, configuré pour entrer en contact de manière amovible avec une partie stationnaire du cadre de siège d'aéronef lors de la configuration repliée.

3. Cadre de siège d'aéronef selon une quelconque revendication précédente, dans lequel la première partie (102) du cadre de baquet de siège comprend un premier élément de limitation configuré et disposé pour entrer en contact avec la deuxième partie (104) de cadre lors de la configuration étendue.

4. Cadre de siège d'aéronef selon la revendication 3, dans lequel :
la deuxième partie (104) de cadre de baquet de siège comprend un deuxième élément de limitation ;
la troisième partie (106) de cadre de baquet de siège comprend un troisième élément de limitation ; et le deuxième élément de limitation est configuré et disposé pour entrer en contact avec le troisième élément de limitation lors de la configuration étendue.

5. Siège d'aéronef comprenant :
un cadre de siège d'aéronef selon une quelconque revendication précédente.

6. Siège d'aéronef selon la revendication 5, comprenant en outre une pluralité de diaphragmes de support, chacun disposé sur une partie de cadre de baquet de siège pour fournir un support à un coussin (800).

7. Siège d'aéronef selon la revendication 6, comprenant en outre un coussin (800) de siège comprenant une partie supérieure et une partie inférieure détachables reliées par une fermeture à glissière (802) sur trois côtés, configuré pour séparer et couvrir le cadre extensible de baquet de siège lors de la configuration étendue.

8. Système de siège de passager comprenant :
un cadre de siège d'aéronef selon l'une quelconque des revendications 1 à 4.

9. Système selon la revendication 8, comprenant en outre une pluralité de diaphragmes de support, chacun disposé sur une partie de cadre de baquet de siège pour fournir un support à un coussin.

10. Système selon la revendication 9, comprenant en outre un coussin de siège comprenant une partie supérieure et une partie inférieure détachables reliées par une fermeture à glissière sur trois côtés, configuré pour séparer et couvrir le cadre extensible de baquet de siège lors de la configuration étendue.
